# EUROPEAN PATENT APPLICATION

(11) **EP 4 800 621 A1**
(43) Date of publication of application: **02.09.2026**
(21) Application number: 25227775.1
(22) Date of filing: 30.12.2025
(51) Int. Cl.: G06Q 10/101, G06Q 10/10, G06Q 50/18, G06F 40/186, G06F 40/174, G06F 16/93

(54) **ELECTRONIC DOCUMENT MANAGEMENT WITH AGREEMENT INFORMATION FROM MULTIPLE EXTERNAL DATA SOURCES**

(30) Priority: 28.02.2025 US 202519066808
(71) Applicant: DocuSign, Inc., San Francisco, CA 94105 (US)
(72) Inventor: Kommalapati, Hanumantha Rao, Kirkland, WA (US); Wang, Fan, Bellevue, WA (US); Marnadi, Prabhakar, Redmond, WA (US); Shah, Hiral, Palo Alto, CA (US); Zhao, Bing, San Jose, CA (US)
(74) Representative: Meissner Bolte Nürnberg

(57) **Abstract**

A system may generate, based on message data, a plan indicating a first external data source and a second external data source. Based on the plan indicating the first external data source, the system may generate a first request for the first external data source based on the message data and first tool data. The system may obtain first information from the first external data source based on the first request. Based on the plan indicating the second external data source, the system may generate a second request for the second external data source based on the message data and second tool data. The system may obtain second information from the second external data source based on the second request. The system may generate result data based on the first information and the second information.

## Description

This application claims the benefit of U.S. Patent Application No. 19/066,808, filed February 28, 2025.

### TECHNICAL FIELD

This disclosure relates generally to electronic document management.

### BACKGROUND

Electronic document management allows for agreements to be electronically executed. For example, two parties may propose changes to an electronic document, and when the electronic document is acceptable, both parties may electronically sign the electronic document.

### SUMMARY

Structured and unstructured agreement information may be scattered across multiple external data sources owned by multiple organizational entities. Some systems may perform information retrieval from each of these external data sources using explicit programming through rules manually configured by human users. Relying on explicit programming may delay a deployment of additional external data sources and/or result in cross system context being missed.

In accordance with the techniques of the disclosure, a system for managing agreement information may automatically generate a request for an external data source based on tool data describing a set of requirements for requesting data for the external data source. In this way, a system may be improved by dynamically modifying requests based on the tool data for each external data source, which may improve an availability of the system and/or reduce a processing burden by helping to avoid errors in requests for data. Moreover, the system may generate a plan for generating result data that indicates an ordered list and/or graph model indicating a context (e.g., a data dependency) between external data sources. In this way, the system may be improved by dynamically generating requests based on a cross system context. Generating requests based on a cross system context may further improve an availability of the system and/or reduce a processing burden by helping to avoid errors in requests for data.

In some examples, the system for managing agreement information may generate the result data as an electronic document or generate an electronic document based on the result data. In this way, a system directed to the technical field of electronic generation may be improved by dynamically generating new data, for example, an electronic document (e.g., for execution or for review) and/or data for populating fields in a template. For example, the system may automatically generate the electronic document by, for example, generating a plan based on message data, generating a first request for a first external data source, generating a second request for a second external data source, and generating the result data based on first information and second information, which may help to produce accurate data for generating electronic documents.

In an example, a system for managing agreement information includes processing circuitry and computer readable media comprising instructions. The instructions, when executed, cause the processing circuitry to generate, based on message data, a plan indicating a first external data source and a second external data source. The instructions further cause the processing circuitry to, based on the plan indicating the first external data source, generate a first request for the first external data source based on the message data and first tool data, the first tool data describing a set of requirements for requesting data from the first external data source and obtain first information from the first external data source based on the first request. The instructions further cause the processing circuitry to, based on the plan indicating the second external data source, generate a second request for the second external data source based on the message data and second tool data, the second tool data describing a set of requirements for requesting data from the second external data source and obtain second information from the second external data source based on the second request. The instructions further cause the processing circuitry to generate result data based on the first information and the second information.

In some examples, a method for managing agreement information includes generating, by processing circuitry and based on message data, a plan indicating a first external data source and a second external data source. The method further includes, based on the plan indicating the first external data source, generating, by the processing circuitry, a first request for the first external data source based on the message data and first tool data, the first tool data describing a set of requirements for requesting data from the first external data source and obtaining, by the processing circuitry, first information from the first external data source based on the first request. The method further includes, based on the plan indicating the second external data source, generating, by the processing circuitry, a second request for the second external data source based on the message data and second tool data, the second tool data describing a set of requirements for requesting data from the second external data source and obtaining, by the processing circuitry, second information from the second external data source based on the second request. The method further includes generating, by the processing circuitry, result data based on the first information and the second information.

In some examples, computer-readable media is encoded with instructions that, when executed, cause processing circuitry to generate, based on message data, a plan indicating a first external data source and a second external data source. The instructions further cause the processing circuitry to, based on the plan indicating the first external data source, generate a first request for the first external data source based on the message data and first tool data, the first tool data describing a set of requirements for requesting data from the first external data source and obtain first information from the first external data source based on the first request. The instructions further cause the processing circuitry to, based on the plan indicating the second external data source, generate a second request for the second external data source based on the message data and second tool data, the second tool data describing a set of requirements for requesting data from the second external data source and obtain second information from the second external data source based on the second request. The instructions further cause the processing circuitry to generate result data based on the first information and the second information.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF THE DRAWINGS

FIG. 1 is a block diagram illustrating an example computing environment for managing agreement information, in accordance with the techniques of this disclosure.
FIG. 2 is a block diagram illustrating an example document management system, in accordance with techniques of this disclosure.
FIG. 3 is a conceptual diagram illustrating an example process for managing agreement information, in accordance with one or more techniques of this disclosure.
FIG. 4 is a flow chart illustrating an example of process for managing agreement information, in accordance with techniques of this disclosure.

Like reference characters denote like elements throughout the text and figures.

### DETAILED DESCRIPTION

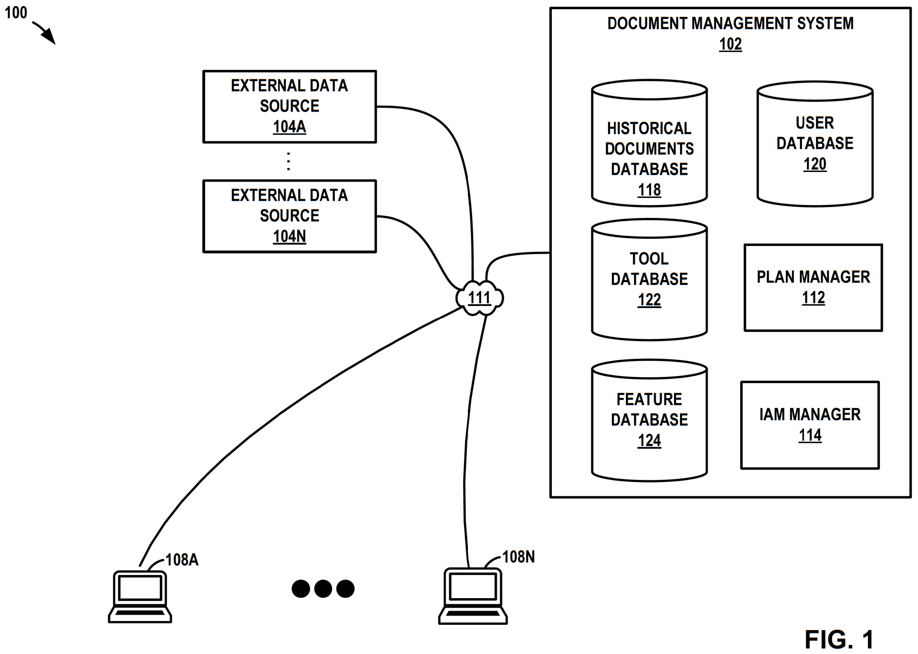

FIG. 1 is a block diagram illustrating an example computing environment 100 for managing agreement information, in accordance with the techniques of this disclosure. In the example of FIG. 1, computing environment 100 includes document management system 102 (referred to herein as "system 102"), one or more external data sources 104 (referred to herein as simply, "external data sources 104" and also referred to herein as "tools 104"), user devices 108A-108N (referred to herein as, "user devices 108"), and network 111.

System 102 may provide for generation and/or management of electronic documents or document packages (e.g., envelopes) for users associated with user devices 108. In the example of FIG. 1, system 102 includes historical documents database 118, user database 120, tool database 122, plan manager 112, feature database 124, and Intelligent agreement management (IAM) manger 114. System 102 may include a collection of hardware devices, software components, and/or data stores that can be used to implement one or more applications or services provided to user devices 108 via network 111. In some examples, system 102 may represent a cloud computing system that provides one or more services via a network. That is, in some examples, system 102 may be a distributed computing system.

System 102 may allow user devices 108 to access documents, via network 111 using a communication protocol, as if such document was stored locally (e.g., to a hard disk of a corresponding user devices 108). Example communication protocols for accessing documents and objects may include, but are not limited to, Server Message Block (SMB), Network File System (NFS), or AMAZON Simple Storage Service (S3).

IAM manager 114 may manage workflows for electronic documents. As used herein, IAM may include one or more of: helping to create agreements in a way that is collaborative, automated and integrated with all business processes and systems, helping to commit to agreements faster, more securely and with a better end-customer, partner and employee experience, or helping to manage agreements dynamically by, for example, breaking down the data hidden within, unlocking value, and eliminating or reducing unnecessary risk. For example, IAM manager 114 may provide tailored applications built for the needs of different individuals, teams, lines of business and/or industries. In some examples, IAM manager 114 may provide modular capabilities and/or workflow designer to build agreement process solutions to match business needs in an easy-to-use, no-code workflow tool. IAM manager 114 may provide enhanced integrations and interoperability to seamlessly connect agreement processes with critical business systems and enable the flow of agreement data across system 102 and partner solutions. In some examples, IAM manager 114 may provide a single, intelligent repository to centrally store, manage and analyze agreements across the organization, unlocking data trapped in agreements to drive efficiencies, uncover opportunities to lower costs and reduce risk.

For example, IAM manager 114 may access historical documents (e.g., stored in historical documents database 118 and/or in external data sources 104) to provide informed, data-backed decisions to entity 110. For instance, IAM manager 114 may proactively suggest and/or simplify a generation of a workflow and/or workflow steps (e.g., Docusign Maestro^{™}). In some instances, IAM manager 114 may identify actionable insights, such as agreements with an upcoming renewal date (e.g., Docusign Navigator^{™}). IAM manager 114 may provide artificial intelligence (AI) capabilities in one or more steps of an agreement lifecycle. For example, IAM manager 114 may provide capabilities for identifying agreements, auto-tagging dynamic fields, generating summaries, and/or identifying risks of an agreement. IAM manager 114 may provide contract lifecycle management (CLM). For example, IAM manager 114 may automate tasks (e.g., auto-populate new agreements or automate agreement routing) and/or manage complex workflows, strengthen compliance (e.g., set conditional rules for review of non-standard terms or allow a legal department to define pre-approved clauses), and/or drive business intelligence.

Network 111 may include the Internet and/or may include or represent any public or private communications network or other network. For instance, network 111 may be a cellular network, Wi-Fi^{®}, ZigBee^{®}, Bluetooth^{®}, Near-Field Communication (NFC), satellite, enterprise, service provider, and/or other type of network enabling transfer of data between computing systems, servers, computing devices, and/or storage devices. One or more of such devices may transmit and receive data, commands, control signals, and/or other information across network 111 using any suitable communication techniques. Network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 111 using one or more network links. The links coupling such devices or systems to network 111 may be Ethernet, Asynchronous Transfer Mode (ATM) or other types of network connections, and such connections may be wireless and/or wired connections. One or more of the devices or systems illustrated in FIG. 1 or otherwise on network 111 may be in a remote location relative to one or more other illustrated devices or systems.

Data exchanged over network 111 may be represented using any suitable format, such as hypertext markup language (HTML), extensible markup language (XML), Portable Document Format (PDF), or JavaScript Object Notation (JSON). In some aspects, network 111 may include encryption capabilities to ensure the security of documents. For example, encryption technologies may include secure sockets layers (SSL), transport layer security (TLS), virtual private networks (VPNs), and Internet Protocol security (IPsec), among others.

User devices 108 may interact with system 102 through a user account with system 102 and optionally one or more user devices accessible to that user. Examples of user devices 108 may include, but are not limited to, portable, mobile, or other devices, such as mobile phones (e.g., smartphones), laptop computers, desktop computers, tablet computers, smart television systems. System 102 may stores account information and/or user information at user database 120. In situations in which system 102 stores and uses information of users operating user devices 108, system 102 may request explicit permission from the users prior to storing and using any personally identifiable information of the users.

Users of user devices 108 may represent an entity, such as an individual user, a group, an organization, a governmental entity, or a business entity (e.g., a corporation, limited liability company (LLC), or professional organization) that is able to interact with document packages (or other content) generated on or managed by system 102. Each user may be associated with a username, email address, full or partial legal name, or other identifier that may be used by system 102 to identify the user and to control the ability of the user to view, modify, execute, or otherwise interact with document packages managed by system 102.

IAM manager 114 may manage a workflow for an electronic document. As used herein a workflow may refer to a structured sequence of steps within system 102 designed to automate and/or streamline a process of preparing, sending, and managing electronic documents. Workflows may enhance efficiency by, for example, reducing manual tasks, ensuring compliance, and/or providing greater control over electronic document handling. A workflow may include one or more of templates, participants, steps, or conditional routing. A template may refer to one or more reusable documents with predefined fields and settings that standardize processes and/or reduce preparation time. Templates can include tags, field placements, and/or workflow routing information. Participants may include individuals and/or entities involved in the agreement process, such as signers, approvers, or recipients. Defining participant roles may help to ensure that each party receives and interacts with the electronic document appropriately. Steps may refer to one or more actions performed during the workflow, including, for example, sending electronic documents for signature, verifying identities, and/or archiving completed agreements. Each step can be configured to meet specific business requirements. Conditional routing may refer to automated decision-making within the workflow that directs electronic documents based on predefined conditions, such as the value of a field and/or the outcome of a previous workflow step, which may help to ensure that electronic documents follow a desired path without manual intervention.

IAM manager 114 may be configured to allow users of user devices 108 to create and send documents to one or more recipients for negotiation, collaborative editing, electronic execution (e.g., electronic signature), automation of contract fulfillment, archival, and analysis, among other tasks. IAM manager 114 may support negotiations between different entities. For example, user device 108A may be associated with a first entity (e.g., a business entity, a particular human being, or a governmental entity) and user device 108N may be associated with a second entity. In this example, user device 108A may send, during a negotiation, a first version of an electronic document (e.g., an electronic contract) to system 102. IAM manager 114 may store the first version of the electronic document in historical documents database 118 and output the first version of the electronic document to user device 108N. In this example, user device 108N may generate a second version of the electronic document that includes one or more changes from the first version of the electronic document and may send the second version of the electronic document to system 102. IAM manager 114 may store the second version of the electronic document in historical documents database 118 and output the second version of the electronic document to user device 108A. The process may continue until both parties agree (e.g., electronically sign) to the final version of the electronic document. In this example, IAM manager 114 may store the final version of the electronic document in historical documents database 118. Throughout negotiations, IAM manager 114 may monitor and/or track the state of the negotiation (e.g., a status of the workflow) as well as proactively facilitate negotiations. For example, IAM manager 114 may automatically provide reminders to user devices 108.

System 102 may be located on premises and/or in one or more data centers, with each data center a part of a public, private, or hybrid cloud. Plan manager 112 and/or IAM manager 114 may represent distributed applications. Plan manager 112 and/or IAM manager 114 may support, for example, enterprise software, financial software, office or other productivity software, data analysis software, customer relationship management, web services, educational software, database software, multimedia software, information technology, healthcare software, or other types of applications or services. Plan manager 112 and/or IAM manager 114 may be provided as a service (-aaS) for Software-aaS, System-aaS, Infrastructure-aaS, Data Storage-aas (dSaaS), or other type of service.

External data sources 104 may provide access to information (e.g., third party information) stored outside of system 102. One or more of external data sources 104 may represent data sources available via the Internet. For example, external data sources 104 may include structured and/or unstructured agreement information scattered across multiple systems owned by multiple organizational entities. External data sources 104 may each represent a cloud storage and/or service. In some examples, an external data source of external data sources 104 may be accessible using a software interface (e.g., an application programming interface (API)) that enables applications to access features and/or data of the external data source. Examples of external data sources may include one or more of a DOCUSIGN system accessible by a first API, a SALESFORCE system accessible by a second API, an ADOBE system accessible by a third API, an ARUBA CENTRAL system accessible by a fourth API, or another system accessible by another API.

Plan manager 112 may integrate with an agreement ecosystem provide IAM manager 114, for example, by integrating atop of IAM core capabilities and platform services to address error-prone, time-consuming, manual, trapped data, and/or disconnected agreement process problems, which may help users of system 102 integrate across offerings IAM manager 114 and/or with processes used to generate an electronic document. For example, structured and/or unstructured agreement information may be scattered across external data sources 104. The agreement information scattered across external data sources 104 may provide valuable insight for one or more of contract lifecycle management (CLM), managing workflows, generating electronic documents, or identifying relevant agreements.

In accordance with the techniques of the disclosure, plan manager 112 may generate, based on message data, a plan indicating external data source 104A and external data source 104B. For example, plan manager 112 may receive a message from user device 108A. The message may include, for example, a query for agreement information and/or an instruction to generate result data. In this example, plan manager 112 may determine a feature associated with the message. For instance, plan manager 112 may determine that a user of user device 108A has selected a feature from a pre-defined set of features to associate with the message. In this example, plan manager 112 may select a plan from pre-defined plans stored in feature database 124. For instance, plan manager 112 may select a plan for the feature "workflow generation." A plan may indicate a subset of tools available to system 102. In this way, processing the request may automatically filter tools that will not be used for a particular feature. For example, a feature for determining agreements that a user is assigned to review may be mapped to a feature-specific plan that omits tools only used for billing or invoicing. The plan may include an ordered list of tools (e.g., indications of one or more of external data sources 104). For instance, the plan may indicate an ordered list of external data source 104A and then external data source 104B. In this instance, plan manager 112 may determine that the plan indicates external data source 104A based on the execution of the plan being initiated. Similarly, plan manager 112 may determine that the plan indicates external data source 104B based on a determination that a request process for external data source 104A has completed. In some examples, the plan may include a graph model indicating one or more of external data sources 104 and at least one data relationship between external data sources 104.

Based on the plan indicating external data source 104A (e.g., in response to the plan indicating external data source 104A as first and an execution of the plan being initiated), plan manager 112 may generate a first request (e.g., an API request) for external data source 104A based on the message data and first tool data. For example, plan manager 112 may retrieve first tool data from tool database 122 that describes the set of requirements for requesting data from external data source 104A. For instance, the set of requirements for requesting data from external data source 104A may indicate required data to access external data source 104A, parameter requirements, or syntax.

Plan manager 112 may obtain first information from the first external data source based on the first request. For example, plan manager 112 may output the first request to external data source 104A. In this example, plan manager 112 may receive a first response from external data source 104A that is responsive to the first request. Plan manager 112 may determine (e.g., parse or decode) the first information from the first response.

Similarly, based on the plan indicating external data source 104B (e.g., in response to the plan indicating external data source 104B as after external data source 104B and in response to determining the first information), plan manager 112 may generate a second request for external data source 104B based on the message data and second tool data. For example, plan manager 112 may retrieve second tool data from tool database 122 that describes the set of requirements for requesting data from external data source 104B. For instance, the set of requirements for requesting data from external data source 104B may indicate required data to access external data source 104A, parameter requirements, or syntax that are different from the first tool data. Plan manager 112 may obtain second information from the second external data source based on the second request. For example, plan manager 112 may output the second request to external data source 104B. In this example, plan manager 112 may receive a second response from external data source 104B that is responsive to the second request. Plan manager 112 may determine (e.g., parse or decode) the second information from the second response.

Plan manager 112 may generate result data based on the first information and the second information. For example, the plan may include a workflow for generating an electronic document. In this example, the result data may include the electronic document. For instance, the plan may identify information to pull from various external data sources and generate the result data as a new electronic document populated with the information. In some examples, the plan includes identifying data in one or more electronic documents of a plurality of electronic documents. In this example, the result data may include an indication of the data in the one or more electronic documents. For instance, the result data may identify a counterparty in all agreements with a particular party. The result data may include an indication of the one or more electronic documents. For instance, the result data may include an indication of a subset of electronic documents and/or a copy of each electronic document of the subset of electronic documents. In some examples, the result data may include an indication of an actionable insight for the one or more electronic documents. For instance, the result data may indicate that a particular set of electronic documents includes a particular contract clause relevant to a recent change in law.

Plan manager 112 may generate an electronic document based on the result data. For example, plan manager 112 may populate, based on the result data, one or more fields of a template for the electronic document. For instance, the result data may identify data for common fields of sales contract agreements (e.g., executed agreements) with the particular company. In this instance, plan manager 112 may populate one or more fields of a template for sales contract agreements with the identified data. In some examples, plan manager 112 may verify, based on the result data, one or more fields of a draft document. For instance, the result data may identify data for a particular field (e.g., bank information) for a particular entity. In this instance, plan manager 112 may compare data in the particular field of a draft sales contract with the identified data. Based on a determination that the data in the particular field and the identified data match, plan manager 112 may initiate a signature process for the draft sales contract. Based on a determination, however, that the data in the particular field and the identified data do not match, plan manager 112 may modify a workflow to include a verification step (e.g., a step for the particular entity to confirm that the bank information is correct).

The techniques described herein may provide one or more technical advantages that realize one or more practical applications in the technical field of generating electronic documents. For example, system 102 may improve an accuracy of a system generating electronic documents by, e.g., utilizing data from multiple external data sources with dynamically generated requests. Improving an accuracy of the system may help to reduce a number of drafts for an electronic document, which may potentially reduce an amount of power consumed by system 102, reduce an amount of data transmitted and/or received by system 102, and/or reduce a memory usage of system 102. In some examples, system 102 may improve an efficiency of a system generating electronic documents by, e.g., proactively storing and providing a plan for a message to plan manager 112. Proactively storing and providing the plan for a message to plan manager 112 may allow for improvements in an accuracy of data generated in electronic documents, which may potentially reduce an amount of power consumed by system 102, reduce an amount of data transmitted and/or received by system 102, and/or reduce a memory usage of system 102.

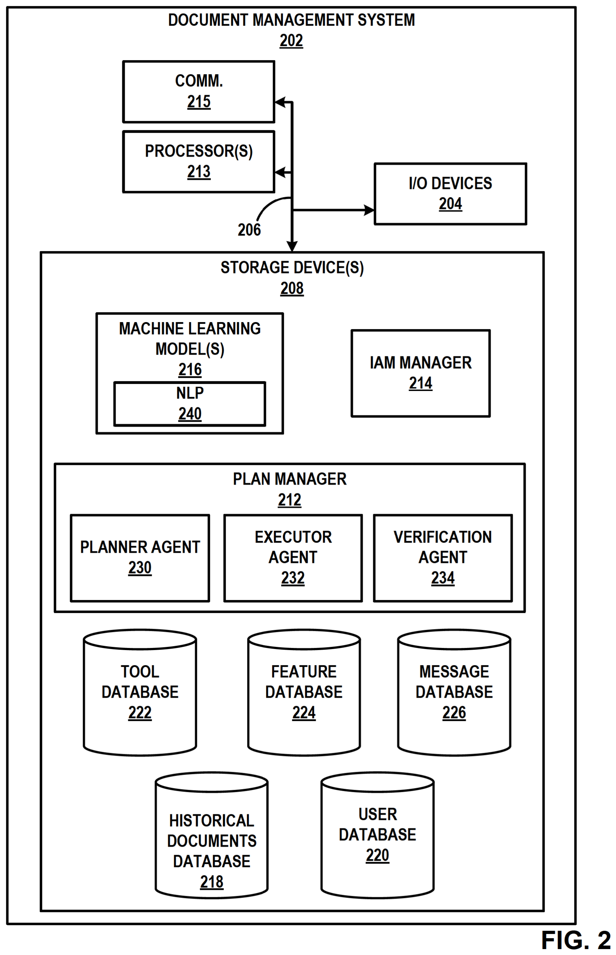

FIG. 2 is a block diagram illustrating an example document management system 202, in accordance with techniques of this disclosure. FIG. 2 is discussed with reference to FIG. 1 for example purposes only. Document management system 202 (referred to herein as "system 202") may include communication units 215, one or more processors 213, input/output (I/O) devices 204, one or more storage devices 208, and communication channels 206. FIG. 2 illustrates only one particular example of document management system 202, and many other examples of document management systems may be used in other instances and may include a subset of components included in example document management system 202 or may include additional components not shown in FIG. 2. For example, functionality of processors 213, communication units 215, I/O devices 204, and/or storage devices 208 may be distributed across multiple computing devices within a cloud-based environment provided by document management system 202.

Communication channels 206 may interconnect each of the components 215, 213, 204, and 208 for inter-component communications (e.g., physically, communicatively, and/or operatively). In some examples, communication channel 206 may include a system bus, a network connection, an inter-process communication data structure, or any other method for communicating data. Communication units 215 of document management system 202 may communicate with one or more external devices via one or more wired and/or wireless networks by transmitting and/or receiving network signals on the one or more networks.

One or more input devices of I/O devices 204 may represent any input devices of document management system 202 not otherwise separately described herein. Input devices of I/O devices 204 may generate, receive, and/or process input. For example, one or more input devices of I/O devices 204 may generate or receive input from a network, a user input device, or any other type of device for detecting input from a human or machine.

One or more output devices of I/O devices 204 may represent any output devices of document management system 202 not otherwise separately described herein. Output devices of I/O devices 204 may generate, present, and/or process output. For example, one or more output devices of I/O devices 204 may generate, present, and/or process output in any form. Output devices of I/O devices 204 may include one or more universal serial bus (USB) interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

Processors 213 may include processing circuitry for implementing functionality and/or execute instructions within document management system 202. For example, processors 213 may receive and execute instructions to manage agreement information. These instructions executed by processors 213 may cause document management system 202 to store and/or modify information within storage devices 208 or processors 213 during program execution. Processors 213 may execute instructions of plan manager 212, IAM manager 214, and/or one or more machine learning models 216. In some instances, processors 213 may include processing circuitry associated with cloud computing processing components (e.g., distributed processors across a cloud computing system).

Storage devices 208 may include historical documents database 218, user database 220, tool database 222, feature database 224, and message database 226. Historical documents database 218 may store historical electronic documents, such as executed agreements (e.g., electronic contracts) and/or unexecuted documents (e.g., rejected agreement documents). User database 220 may include a role (e.g., legal, technical, or finance) for each user. In some examples, user database 220 may include personal preferences for each user and/or an aggregated personal profile for each user. Personal preferences may include user-defined preferences. Feature database 224 may store a mapping that assigns each feature of a set of features to a respective graph model and/or an ordered list of external data sources. In some examples, feature database 224 may store a mapping that assigns a feature to verification instructions. Tool database 222 may store tool data describing a set of requirements for requesting data from each tool of a plurality of tools (e.g., each one of external data sources 104 of FIG. 1). In some examples, tool database 222 may store data describing functions of each tool and/or prompt data for generating requests for each tool. For instance, tool database 222 may store data describing a function of invoicing information for external data source 104A and/or include prompt data configured to instruct a machine learning model to generate a request for external data source 104A.

Message database 226 may store context for a message process. For example, planner agent 230 may store one or more of a message, a feature, user context, or account context, message data, or a plan for a message in message database 226. Executor agent 232 may store information retrieved from each external data source for a message in message database 226. Verification agent 234 may store verification information in message database 226. In this way, context for a message may be accessible for each agent of plan manager 212.

One or more machine learning models 216 (also referred to herein as simply "machine learning model 216") may represent one or more machine learning models that, for example, integrate with IAM, including AI-Powered CLM Tools, such as DOCUSIGN CLM, to provide AI-powered contract management solutions. Plan manager 212 may use machine learning model 216 and/or IAM data to manage agreement information. For example, machine learning model 216 may include a natural language processor (NLP) 240. For instance, plan manager 212, with machine learning model 216, may determine process messages to generate a set of instructions.

Machine learning model 216 may include one or more generative machine learning models and/or one or more traditional machine learning models. Examples of generative machine learning models may include, for example, transformer-based deep neural networks or large language models (LLMs). Generative machine learning models may be associated with natural language prompts, or simply "prompts." Examples of traditional machine learning models may include, for example, a rule-based machine learning model or a deterministic machine learning model. Traditional machine learning models may be associated with training data.

Machine learning model 216 may include a generative machine learning model configured to summarize information. Examples of a generative machine learning model may include encoder based models, decoder based models, or encoder/decoder based models. Examples of encoder based models may include, for example, a bidirectional encoder representations from transformers or "BERT" machine learning model, convolutional neural networks (CNNs), and/or recurrent neural networks (RNNs). Examples of decoder based models may include, for example, generative pre-trained transformers (GPT) models, variational autoencoders (VAEs), and/or generative adversarial networks (GANs). Examples of encoder/decoder based models may include, for example, a transformer encoder-decoder, such as a bidirectional (BERT-like) encoder and an autoregressive (GPT-like) decoder (e.g., BART), a Text-To-Text Transfer Transformer (T5) model, and/or large language models (LLMs). Machine learning model 216 may include a visualization tool model, such as Tensorboard^{™} or matplotlib^{™}).

Plan manager 212 may include planner agent 230, executor agent 232, and verification agent 234. While illustrated outside of machine learning model 216, one or more of planner agent 230, executor agent 232, and verification agent 234 may be implemented as a machine learning model. For example, executor agent 232 may be implemented as a generative AI model configured with prompt data generated based on tool data retrieved from tool database 222.

In accordance with the techniques of the disclosure, planner agent 230 may generate, based on message data, a plan indicating external data source 104A and external data source 104B. For example, planner agent 230 may determine a feature associated with the message. For instance, planner agent 230 may determine that a user of user device 108A has selected a feature from a pre-defined set of features to associate with the message. In this example, planner agent 230 may select a plan from plans stored in feature database 224. The plan may include an ordered list of external data sources 104. In some examples, the plan may include a graph model indicating data relationships between external data sources 104. For instance, the graph model may include a first node, a second node, and an edge connecting the first node to the second node. In this instance, the first node may represent external data source 104A. The second node may represent external data source 104B. The edge may indicate a data dependency of external data source 104B to external data source 104A. For instance, the edge may indicate that information retrieved from external data source 104B may depend on data retrieved from external data source 104A.

Based on the plan indicating external data source 104A (e.g., in response to the plan indicating external data source 104A), executor agent 232 may generate a first request (e.g., an API request) for external data source 104A based on the message data and first tool data. For example, executor agent 232 may retrieve first tool data from tool database 222. Executor agent 232 may obtain first information from external data source 104A based on the first request.

In some examples, executor agent 232 may determine the first request for external data source 104A based on prompt data. For example, executor agent 232 may generate the prompt data based on the set of requirements for requesting data from the first external data source. For instance, executor agent 232 may retrieve the prompt data (e.g., pre-configured prompt data) from the set of requirements for requesting data from external data source 104A. In some examples, executor agent 232 may generate the prompt data based on the set of requirements for requesting data from the first external data source. In this example, executor agent 232 may generate the first request based on the prompt data. For instance, executor agent 232 may execute using the prompt data for the first tool as part of a prompt to generate the first request.

Similarly, based on the plan indicating external data source 104B, executor agent 232 may generate a second request for external data source 104B based on the message data and second tool data. For example, executor agent 232 may retrieve second tool data from tool database 222 that describes the set of requirements for requesting data from external data source 104B. Executor agent 232 may obtain second information from external data source 104B based on the second request. Executor agent 232 may generate result data based on the first information and the second information.

In some examples, executor agent 232 may generate a second request for external data source 104B based on a data dependency to the first information. For example, executor agent 232 may determine that an edge of a graph model indicates a data dependency of external data source 104B to external data source 104A. For instance, executor agent 232 may determine that contact information from external data source 104A is used to generate the second request for external data source 104B. In this example, executor agent 232 may generate the second request for external data source 104B further based on the first information. For instance, executor agent 232 may generate the second request for external data source 104B with an indication of contact information from the first information retrieved from external data source 104A.

Verification agent 234 may verify the results. For example, verification agent 234 may determine verification instructions based on the feature. For instance, verification agent 234 may determine a mapping, by feature database 224, that assigns a feature to verification instructions. Verification agent 234 may help to ensure that an answer to the message is complete. In some examples, verification agent 234 may determine verification information. For example, verification agent 234 may store, based on verification instructions and at message database 226, data to be used as context for generating further results.

The techniques described herein may provide one or more technical advantages that realize one or more practical applications. For example, system 202 may improve an efficiency of a system managing agreement information by, e.g., utilizing data from multiple external data sources with dynamically generated requests, which may potentially reduce an amount of computational burden on the system, reduce an amount of power consumed by system 202, reduce an amount of data transmitted and/or received by system 202, and/or reduce a memory usage of system 202 compared to systems that rely solely on manually programmed requests. In some examples, system 202 may improve an efficiency of a system managing agreement information by, e.g., proactively storing and providing context for a message to agents of plan manager 212. Proactively storing and providing context for a message to agents of plan manager 212 may allow for additional filtering of data with context and/or more accurate results, which may potentially reduce an amount of computational burden on the system, reduce an amount of power consumed by system 202, reduce an amount of data transmitted and/or received by system 202, and/or reduce a memory usage of system 202 compared to systems that rely on request to specify context for a message.

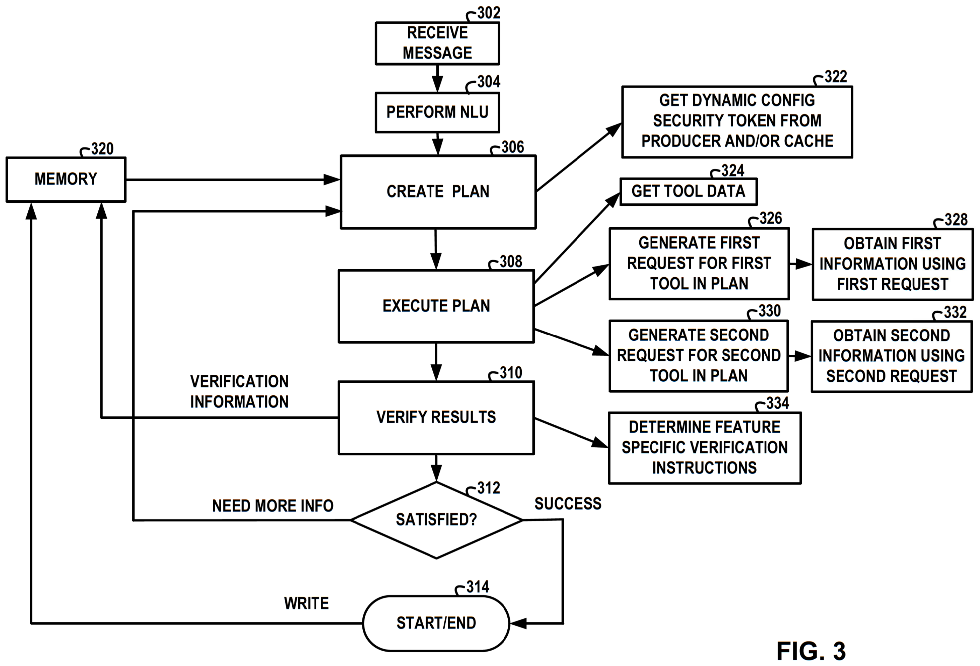

FIG. 3 is a conceptual diagram illustrating an example process for managing agreement information, in accordance with one or more techniques of this disclosure. FIG. 3 is discussed with reference to FIGS. 1-2 for example purposes only. Planner agent 230 receives a message

(302). For example, Planner agent 230 may receive a query "get my agreements with Tally and the respective party contact information." In some examples, planner agent 230 may determine an indication of a feature for the message. A feature may may be associated with a set of functions to be performed on the message data. Planner agent 230 may determine an indication of a feature for the query based on a user selection of the feature. The feature may refer to a product feature, such as, agreement intelligence, where a query identifies one or more agreements. In some examples, a feature may include identifying tickets for review by a user. In another example, a feature may include performing an extraction of data from agreements. Planner agent 230 may determine user context and/or account context. User context may include one or more of a user identifier (UserID) or a role of the user. Account context may include account information associated with the user, such as, a number of results, or a set of date ranges to reduce results.

For example, planner agent 230 may generate, based on the message, the feature, a user account the following message data:

```
       {message = ["get my agreements with Tally and the respective party contact
       information."
       feature = "Agreement Intelligence"
       userId = "User1@company.com"}
```

Planner agent 230, with NLP 240, may perform natural language understanding (NLU) on the message data (304). For example, planner agent 230, with NLP 240, may generate a set of instructions based on the message data. For instance, planner agent 230, with NLP 240, may generate the set of instructions that includes selecting agreements in an agreement database accessible by "User1 @company.com" that include a party contact matching contact information for "Tally" and identifying party contact information for the selected agreements. NLP 240 may be implemented using generative AI.

Planner agent 230 may create a plan (306). For example, planner agent 230 may determine a set of tools for responding to the message represented as one or more of an ordered list or a graph model, such as, a feature specific execution graph. The graph model may include nodes representing tools and edges representing a relationship between tools. For example, an edge may represent data needed for input into a tool. For instance, an edge may represent that contact information is used from a first tool as input for a second tool configured to search an agreement database.

In some examples, planner agent 230 may create the plan based on the feature. For example, planner agent 230 may determine a mapping that assigns a feature to an ordered list of tools and/or a graph model. For example, planner agent 230 may select a graph model assigned to a feature indicated in the message. In another example, planner agent 230 may select an ordered list of tools that is assigned to a feature indicated in the message. Feature database 224 may assign the feature to a graph model and/or an ordered list.

Planner agent 230 may generate credential information for the set of tools from a security token producer and/or cache (322). For example, planner agent 230 may generate a request to get a dynamic configuration for authentication and authorization (e.g., a Json web token) from a security token producer and/or a cache of system 202. Planner agent 230 may output the set of tools for responding to the message with an indication of credential information for each tool of the set of tools.

Executor agent 232 may execute the plan (308). For example, executor agent 232 may obtain tool data (324) from tool database 222. For example, executor agent 232 may obtain, from tool database 222, first tool data for external data source 304A. In this example, executor agent 232 may obtain, from tool database 222, second tool data for external data source 304B. Tool data may include a set of requirements for requesting data from the tool and/or a description of one or more functions performed by a tool. In some examples, set of requirements may include configuration schemas for a tool, such as, required parameters and/or syntax information. Tool data may include an indication of prompt material.

Executor agent 232 may generate a first request for a first tool in the plan (326). For example, executor agent 232 may generate, based on one or more of the plan, the message data, and first tool data for the first tool, a first request. For instance, executor agent 232 may generate the first request for the first tool in response to determining that the plan indicates the first tool is to be executed next in the plan. In this instance, executor agent 232 may generate the first request for the first tool to indicate "tally" in a particular parameter of the request (e.g., API request) based on a determination that the message data specified "Tally," and that the tool data indicates the particular parameter. In some examples, executor agent 232 may generate the first request using prompt material for the first tool as an input (e.g., as part of a prompt and/or as meta-data).

In some examples, executor agent 232 may perform a validation step based on the tool data for the first tool. For example, executor agent 232 may determine that the first request is valid based on a determination that the first request satisfies criteria (e.g., all required data) specified by the tool data for the first tool. Based on a determination that the first request is valid, executor agent 232 may output the request (e.g., send an API request). Based on a determination that the first request is not valid, executor agent 232 may initiate an error process. For example, executor agent 232 may output an error and a producer or agent may resolve the error (e.g., determine missing data and/or prompt a user for the missing data).

Executor agent 232 may obtain first information using the first request (328). For example, executor agent 232 may output, to external data source 104A (e.g., SALESFORCE) and based on a determination that the first request is valid, the first request as an API request. In this example, executor agent 232 may receive the first information that is responsive to the first request from external data source 104A. For instance, executor agent 232 may receive the first information indicating Tally contact information (e.g., contact information for an entity Tally).

Executor agent 232 may generate a second request for a second tool in the plan (330). For example, executor agent 232 may generate, based on one or more of the plan, the message data, the tool data for the second tool, or the first information, a second request. For instance, executor agent 232 may generate the second request for the second tool in response to determining that the plan indicates the second tool is to be executed next in the plan. In this instance, executor agent 232 may generate the second request for the second tool to indicate at least a portion of the Tally contact data from the first information (e.g., a full name of Tally) in a particular parameter based on a determination that the tool data for the second tool indicates the particular parameter is for specifying contact data. Similarly, executor agent 232 may generate the second request for the second tool to indicate a user identifier (e.g., user1@company.com) from the message data in a particular parameter based on a determination that the tool data for the second tool indicates the particular parameter is for specifying a user. Executor agent 232 may generate the second request for the second tool to indicate the query "identify party contact information for the selected agreements." In some examples, executor agent 232 may generate the second request using prompt material for the second tool as an input (e.g., as part of a prompt and/or as meta-data).

Executor agent 232 may obtain second information using the first request (332). For example, executor agent 232 may output, to external data source 104B (e.g., an agreement repository system), the second request as an API request. In this example, executor agent 232 may receive the second information that is responsive to the first request from external data source 104B. For instance, executor agent 232 may receive the second information indicating party contact information for a set of agreements where a party corresponds to (e.g., matches) the Tally contact information.

Executor agent 232 may repeat one or more of steps 326-332 for each request to each tool in the plan to generate results (e.g., a response to the query) to the message data. While FIG. 3 illustrates a process using two tools, in some examples, a number of tools in the plan may be one or more than two. The process for the second tool (e.g., steps 330, 332) of FIG. 3 include a data dependency from the first tool (e.g., contact information). However, in some examples, subsequent tools (e.g., one or more of a second tool, a third tool, and/or other tools) may not have a data dependency to another tool. Moreover, planner agent 230 may generate a plan that executes tools in series, in parallel, or in series and parallel with one another. For example, planner agent 230 may generate a plan that causes executor agent 232 to generate and output a request to a first tool in parallel with generating and outputting a request for a second tool.

Verification agent 234 may verify the results (310). In this example, verification agent 234 may determine feature specific verification instructions (334). That is, verification agent 234 may determine verification instructions based on the feature. For example, verification agent 234 may determine a mapping, by feature database 224, that assigns a feature to verification instructions. For instance, verification instructions for the feature "Agreement Intelligence" may indicate a threshold (e.g., a range, minimum, or maximum number of agreements) to a number of agreements in a set of agreements. In this example, verification agent 234 may determine verification information based on verification instructions and save the verification information to memory 320. For instance, verification agent 234 may store verification information "No of results already retrieved 100k" in message database 226 based on the verification instructions indicating to store the number of results retrieved.

Based on a determination that the results satisfy the feature specific verification instructions ("success" of step 312), verification agent 234 may end the process (314) and store the results in memory 320. Message database 226 may be an example of memory 320. Based, however, on a determination that the results do not satisfy the feature specific verification instructions ("need more info" of step 312), verification agent 234 may repeat steps 306-308 with the additional verification information. In this example, the message data may include:

```
{message = ["get my agreements with Tally and the respective party contact
       information.", "No of results already retrieved 100k"
       feature = "Agreement Intelligence"
       userId = "User1@company.com"}
```

In this example, executor agent 232 may generate, when repeating step 308, the second request for a second tool in the plan with the additional verification information (e.g., "No of results already retrieved 100k"). In this example, executor agent 232 may generate the second request further based on the additional verification information. For instance, executor agent 232 may compare the number of results retrieved with a threshold of the account information. In response to a determination that the number of results retrieved does not satisfy the threshold of the account information, executor agent 232 may apply a date range indicating in the account information (e.g., agreements executed and/or generated in the last 12 months). In this way, verification agent 234 may cause planner agent 230 and executor agent 232 to re-run with the verification information to improve the results compared to system that do not include a verification agent 234.

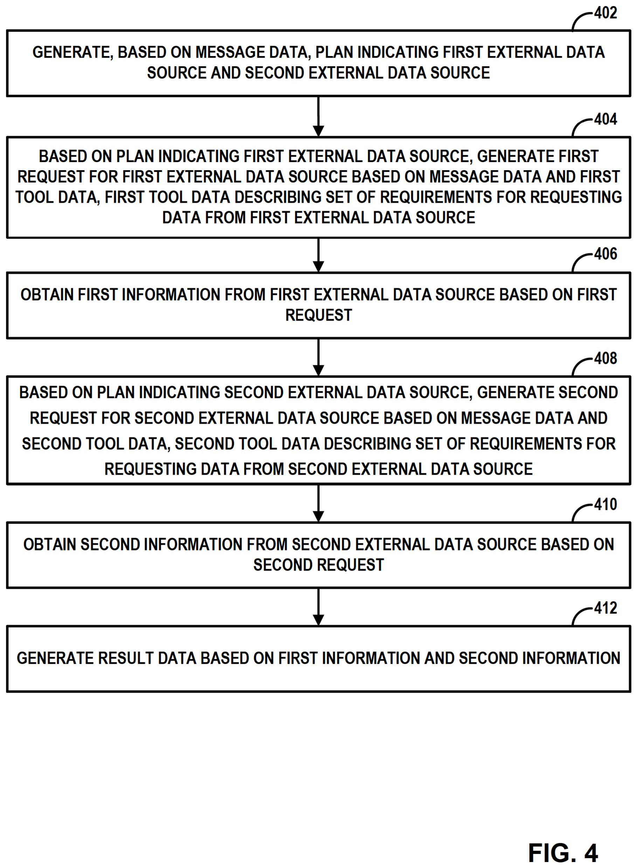

FIG. 4 is a flow chart illustrating an example of process for managing agreement information, in accordance with techniques of this disclosure. FIG. 4 is discussed with reference to FIGS. 1-3 for example purposes only. Planner agent 230 may generate, based on message data, a plan indicating a first external data source and a second external data source (402). For example, planner agent 230 may generate the message data based on one or more of a received message (e.g., a query or request), an indication of a feature, or a user identifier. In this example, planner agent 230 may perform natural language understanding on the received message to generate a set of instructions. Planner agent 230 may generate the plan based on the set of instructions.

In some examples, the message data may include an indication of a feature associated with a set of functions to be performed on the message data. In this example, planner agent 230 may select the plan from a plurality of plans based on the feature. The plan may include an ordered list indicating instructions to obtain the first information from external data source 104A before obtaining the second information from external data source 104B. In some examples, the plan includes a graph model comprising a first node, a second node, and an edge connecting the first node to the second node. The first node may represent external data source 104A, the second node may represent external data source 104B, and the edge may indicate a data dependency of the external data source 104B to the external data source 104A. For example, based on the edge indicating the data dependency of external data source 104B to the external data source 104A, planner agent 230 may generate the second request for external data source 104B further based on the first information.

Executor agent 232 may, based on the plan indicating the first external data source, generate a first request for the first external data source based on the message data and first tool data, the first tool data describing a set of requirements for requesting data from the first external data source (404). For example, executor agent 232 may determine a prompt data based on the message data and the set of requirements for requesting data from external data source 104A. In this example, executor agent 232 may generate the first request based on the prompt data. The first request may include API request. Executor agent 232 may obtain first information from the first external data source based on the first request (406). For example, executor agent 232 may may output the first request to external data source 104A and receive the first information from external data source 104 .

Executor agent 232 may, based on the plan indicating the second external data source, generate a second request for the second external data source based on the message data and second tool data, the second tool data describing a set of requirements for requesting data from the second external data source (408). For example, executor agent 232 may determine a prompt data based on the message data and the set of requirements for requesting data from external data source 104B. In this example, executor agent 232 may generate the second request based on the prompt data. The second request may include API request.

In some examples, executor agent 232 may generate a second request for external data source 104B based on the first information. For example, executor agent 232 may determine that an edge of a graph model indicates a data dependency of external data source 104B to external data source 104A. In this example, executor agent 232 may generate the second request for external data source 104B further based on the first information. For instance, executor agent 232 may generate the second request for external data source 104B with an indication of contact information from the first information retrieved from external data source 104A. While the example of FIG. 4, executor agent 232 generates requests for two tools, in other examples, executor agent 232 may generate requests for more than two tools.

Executor agent 232 may obtain second information from the second external data source based on the second request (410). For example, executor agent 232 may may output the second request to external data source 104B and receive the second information from external data source 104.

In some examples, executor agent 232 may determine credential information (e.g., API token information) based on a user identifier indicated in the message data. In this example, executor agent 232 may generate the first request further based on the credential information. For instance, executor agent 232 may generate the first request to include a token indicated in the credential information. Similarly, executor agent 232 may generate the second request further based on the credential information. For instance, executor agent 232 may generate the second request to include a token indicated in the credential information.

Executor agent 232 may generate result data based on the first information and the second information (412). For example, the plan may include a workflow for generating an electronic document. In this example, the result data may include the electronic document. In some examples, the plan includes identifying data in one or more electronic documents of a plurality of electronic documents. In this example, the result data may include an indication of the data in the one or more electronic documents. For example, the result data may include an indication of the one or more electronic documents. In some examples, the result data may include an indication of an actionable insight for the one or more electronic documents. Executor agent 232 may generate an electronic document based on the result data. For example, executor agent 232 may populate, based on the result data, one or more fields of a template for the electronic document. In some examples, plan manager 112 may verify, based on the result data, one or more fields of a draft document.

In some examples, verification agent 234 may verify the result data. For example, the message data may include an indication of a feature associated with a set of functions to be performed on the message data. In this example, verification agent 234 may determine verification instructions based on the feature. For instance, verification agent 234 may determine feature-specific verification instructions using a mapping in feature database 224. In this example, verification agent 234 may verify the result data based on the verification instructions. In some examples, verification agent 234 may generate verification information based on the verification instructions. For instance, verification agent 234 may generate verification information to indicate a number of agreement documents indicated in the result data.

Like reference characters denote like elements throughout the text and figures.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing an understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

## Claims

1. A system for managing agreement information, the system comprising:
processing circuitry; and
computer readable media comprising instructions that, when executed, cause the processing circuitry to:
generate, based on message data, a plan indicating a first external data source and a second external data source;
based on the plan indicating the first external data source, generate a first request for the first external data source based on the message data and first tool data, the first tool data describing a set of requirements for requesting data from the first external data source;
obtain first information from the first external data source based on the first request;
based on the plan indicating the second external data source, generate a second request for the second external data source based on the message data and second tool data, the second tool data describing a set of requirements for requesting data from the second external data source;
obtain second information from the second external data source based on the second request; and
generate result data based on the first information and the second information.

2. The system of claim 1, wherein the message data comprises an indication of a feature associated with a set of functions to be performed on the message data and wherein to generate the plan, the instructions cause the processing circuitry to select the plan from a plurality of plans based on the feature.

3. The system of any of claims 1-2, wherein the plan comprises an ordered list indicating instructions to obtain the first information from the first external data source before obtaining the second information from the second external data source.

4. The system of any of claims 1-3,
wherein the plan comprises a graph model comprising a first node, a second node, and an edge connecting the first node to the second node, the first node representing the first external data source, the second node representing the second external data source, and the edge indicating a data dependency of the second external data source to the first external data source, and
optionally, wherein the instructions cause the processing circuitry to, based on the edge indicating the data dependency of the second external data source to the first external data source, generate the second request for the second external data source further based on the first information.

5. The system of any of claims 1-4, wherein the instructions further cause the processing circuitry to:
determine credential information based on a user identifier indicated in the message data,
wherein the instructions cause the processing circuitry to generate the first request further based on the credential information, and
wherein the instructions cause the processing circuitry to generate the second request further based on the credential information.

6. The system of any of claims 1-5, wherein the message data comprises an indication of a feature associated with a set of functions to be performed on the message data and wherein the instructions further cause the processing circuitry to:
determine verification instructions based on the feature; and
verify the result data based on the verification instructions,
optionally, wherein the instructions further cause the processing circuitry to generate verification information based on the verification instructions.

7. The system of any of claims 1-6, wherein the instructions further cause the processing circuitry to:
generate the message data based on a received message, an indication of a feature, and a user identifier; and
perform natural language understanding on the received message to generate a set of instructions,
wherein the instructions cause the processing circuitry to generate the plan based on the set of instructions.

8. The system of any of claims 1-7, wherein the plan comprises a workflow for generating an electronic document and wherein the result data comprises the electronic document.

9. The system of any of claims 1-7, wherein the plan comprises identifying data in one or more electronic documents of a plurality of electronic documents and wherein the result data comprises an indication of the data in the one or more electronic documents.

10. The system of claim 9,
wherein the result data comprises an indication of the one or more electronic documents, or
wherein the result data comprises an indication of an actionable insight for the one or more electronic documents.

11. The system of claim 9,
wherein the instructions further cause the processing circuitry to generate an electronic document based on the result data, and
optionally, wherein to generate the electronic document the instructions cause the processing circuitry to populate, based on the result data, one or more fields of a template for the electronic document or wherein to generate the electronic document the instructions cause the processing circuitry to verify, based on the result data, one or more fields of a draft document.

12. A method for managing agreement information, the method comprising:
generating, by processing circuitry and based on message data, a plan indicating a first external data source and a second external data source;
based on the plan indicating the first external data source, generating, by the processing circuitry, a first request for the first external data source based on the message data and first tool data, the first tool data describing a set of requirements for requesting data from the first external data source;
obtaining, by the processing circuitry, first information from the first external data source based on the first request;
based on the plan indicating the second external data source, generating, by the processing circuitry, a second request for the second external data source based on the message data and second tool data, the second tool data describing a set of requirements for requesting data from the second external data source;
obtaining, by the processing circuitry, second information from the second external data source based on the second request;
generating, by the processing circuitry, result data based on the first information and the second information.

13. The method of claim 12, further comprising the processes performed by the system recited in any of claims 2-11.

14. Computer-readable media encoded with instructions that, when executed, cause processing circuitry to:
generate, based on message data, a plan indicating a first external data source and a second external data source;
based on the plan indicating the first external data source, generate a first request for the first external data source based on the message data and first tool data, the first tool data describing a set of requirements for requesting data from the first external data source;
obtain first information from the first external data source based on the first request;
based on the plan indicating the second external data source, generate a second request for the second external data source based on the message data and second tool data, the second tool data describing a set of requirements for requesting data from the second external data source;
obtain second information from the second external data source based on the second request; and
generate result data based on the first information and the second information.

15. The computer-readable storage medium of claim 14, wherein the instructions further cause the processing circuitry to perform the processes performed by the system recited in any of claims 2-11.
